# EUROPEAN PATENT APPLICATION

(11) **EP 0 691 768 A1**
(43) Date of publication of application: **10.01.1996**
(21) Application number: 94480059.8
(22) Date of filing: 07.07.1994
(51) Int. Cl.: H04L 12/56

(54) **A method and system for implementing relative time discriminations in a high speed data transmission network**

(71) Applicant: International Business Machines Corporation, Armonk, N.Y. 10504 (US)
(72) Inventor: Gallet, Georges, F-06490 Tourrettes Sur Loup (FR); Pauporte, André, F-06480 La Colle Sur Loup (FR); Munier, Jean-Marie, F-06800 CAgnes sur mer (FR); Spagnol, Victor, F-06800 CAgnes sur Mer (FR)
(74) Representative: Lattard, Nicole

(57) **Abstract**

A data transmission network congestion control mechanism for smoothing individual users' traffic based on agreed-to bandwidth conditions, said control implying detecting the oldest of two dates d1 and d2 respectively defined by times t1 and t2 provided by a wraparound timer as respective numbers A and B coded in a 2's-complement form. This relative date discrimination is implemented by splitting the wraparound timer swing into four consecutive intervals defined by the two most significant bits (bit₀ and bit₁) of the timer expressed values, then using said most significant bits and the sign of A - B, to define a one-bit valued "X" indicator. Whereby detecting the oldest of the two dates d1 and d2 is straightfowardly derived from the value of the X bit.

## Description

This invention deals with high-speed data transmission networks and more particularly with a method and system for implementing relative time or date discriminations to enable efficiently performing congestion control in a high speed packet switching environment.

### BACKGROUND OF THE INVENTION

In the 1970s IBM introduced its Systems Network Architecture (SNA) as the blueprint for the future design of its telecommunication networks. During the past 15 years SNA has evolved to be a robust, layered communications architecture that provides for hierarchical communication among a diverse group of IBM communication products. SNA is now the principal networking architecture underlying some 40.000 operational customer networks that, in many cases, are used by large customers running major applications on large mainframes.

If future computing environments are expected to be characterized by distributed processing among peer platforms, they are also expected to take advantage of the virtual explosion in high bandwidth connectivity now underway. In the SNA networks of the 70s and early 80s, line speeds of 9.6 kbps (and lower) and 64 kbps pipes were the norm. During the 80s T-1 connections (1.5 Mbps) saw widespread use with T-3 (45Mbps) service becoming available in the late 80s. Local Area Networks (LAN) segments of 10 - 100 Mbps, are now anticipated and it is likely that backbones will evolve to support such LAN traffic in the future.

Even the recently achieved line speeds are only the beginning of what technology has to offer in the 90s and beyond. More than 2 million miles of fiber have been installed in the U. S. with more being added daily. The potential bandwidth is huge with 400⁺ Mbps available in some locations today and 2.4 Gbps available soon using Synchronous Optical Network (SONET) transmission technology.

It is clear that there is a requirement to support distributed computing applications across high-speed backbones that may be carrying LAN traffic, voice, video, and traffic among channel-attached hosts, business workstations, engineering workstations, terminals, and small to intermediate file servers. This traffic will reflect a heterogeneous mix of end-user network protocols including, for example : Ethernet, Token Ring, APPN, NetBios, FDDI, TCP/IP, OSI, SMDS, ISDN, ATM, and SONET. This vision of a high-speed protocol-agile backbone network has been the driver for the development of the new IBM architecture. Accordingly new challenges must be met by future networks.

One of those challenges is to minimize the processing time within each node while managing full network congestion-control to meet the network requirements based on users' traffics as agreed-to, on a case by case basis.

To meet those challenges, the network congestion control system shall have to operate time discriminations and compare dates corresponding to time events which are not timestamped with a unique universal dating method (such as year, month, day, hour, minute, second, millisecond, etc...), but are simply marked with the current value of a free-runing timer, and more particularly of a free-running wraparound binary counter acting as a timer.

### OBJECTS OF THE INVENTION

Accordingly, one object of this invention is to provide a method and device for implementing discrimination among relative time occurences of events.

Another object of this invention is to provide a method and device for performing said time discrimination on events timing defined with a free-running wraparound timer.

Still another object of this invention is to provide a method and device for implementing said time discrimation in a high speed data transmission network.

Still another object of this invention is to provide a method and device for implementing relative time determination to enable congestion control in a high-speed data transmission network.

Still another object of this invention is to provide a system including means for implementing relative dating determination to enable congestion control in a high-speed data transmission network including leaky bucket operation in a network node.

### SUMMARY OF THE INVENTION

The above mentioned objects are achieved by a method for implementing relative time discrimination to detect the oldest between dates of events (d1 and d2) being respectively defined by individual times (t1 and t2) provided by a free running wraparound counter acting as a timer, said events being relatively close to each other as compared to the timer period. The method comprises the operations of splitting the timer period into four consecutive adjacent intervals said intervals being defined by the two most significant bits of the timer value, 10, 11, 00 and 01, respectively. Then setting a one bit valued "X indicator" based on t1-t2 sign and on the timer interval location of the respective events as expressed by the two most significant bits of the binary numbers A and B expressing t1 and t2 values respectively ; and finally testing said X indicator bit value and defining the oldest between d1 and d2 dates based on said X bit value test.

These and other objects, characteristics and advantages of the invention will become more apparent from the following detailed description of a preferred embodiment of the invention, when considered with reference to the accompanying drawings.

### BRIEF DESCRIPTION OF THE DRAWINGS

- Figure 1 is a schematic representation of a modern communication system,
- Figure 2 is made to illustrate the leaky bucket mechanism.
- Figure 3 is a simplified flow-chart of the leaky bucket operation.
- Figure 4 is a schematic representation of a wraparound timer hardware implementation.
- Figures 5 and 7 are representations of the timer signal versus time.
- Figure 6 is a Flowchart for implementing date discriminations.
- Figure 8 is a representation of the invention parameter truth table.
- Figure 9 is a schematic representation of ALU operation for implementing the invention.
- Figure 10 is a schematic representation of a hardware implementation of a device to be used for the invention.
- Figure 11 is a flowchart for implementing the invention.

### DETAILED DESCRIPTION OF PREFERRED EMBODIMENT OF THE INVENTION

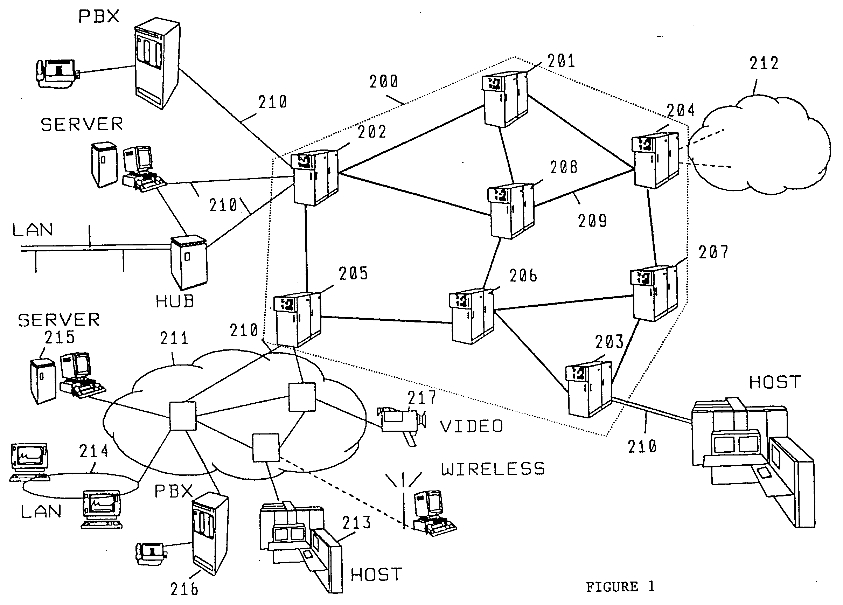

As illustrated in Figure 1, a typical model of communication system is made of several user networks (212) communicating through a high performance network (200) using private lines, carrier provided services, or public data networks. Each user network can be described as a set of communications processors and links (211) interconnecting large computers used as Enterprise Servers (213), user groups using workstations or personal computers attached on LAN (214), applications servers (215), Private Branch eXchange (PBX) (216) or video servers (217). These user networks, dispersed in different establishments, need to be interconnected through wide area transport facilities, and different approaches can be used for organizing the data transfers. Some architectures involve the checking for data integrity at each network node, thus slowing down the transmission. Others are essentially looking for a high speed data transfer, and to that end, the transmission, routing and switching techniques within the nodes are optimized to process the flowing packets towards their final destination at the highest possible rate. The present invention belongs essentially to the latter category and more particularly to the fast packet switching network architecture.

The general view in Figure 1 shows a fast packet switching transmission system comprising eight nodes (201 to 208) each node being interconnected by means of high speed communication lines called Trunks (209). The access (210) to the high speed network by the users is realized through Access Nodes (202 to 205) located at the periphery. These Access Nodes comprise one or more Ports, each one providing an access point for attaching external devices supporting standard interfaces, to the network, and performing the conversions required to transport the users data flow accross the network from and to other external devices. As example, the Access Node (202) interfaces respectively a Private Branch eXchange, an application server and a hub through three Ports, and communicates through the network by means of the adjacent Transit Nodes (201, 208 and 205).

Each network node (201 to 208) includes a Routing Point where the incoming data packets are selectively routed on the outgoing Trunks towards the neighboring Transit Nodes. Such routing decisions are made according to the information contained in the header of the data packets and based on predefined data transport conditions.

The above description obviously shows how complex a modern data network could be. This, combined with the already mentioned high line speeds and high traffic requirements certainly do emphasize design challenges.

Perhaps the fundamental challenge for high-speed networking is to minimize the processing time within each node in the network. Consequently first, the architecture must minimize both the awareness and the function of intermediate (or transit) nodes in the network. Second, there can be no hop-by-hop flow control or error recovery (at least for the demanding high-bandwidth applications). Thus congestion and flow control should be provided at the end-points of network connections.

Logically the network architecture should be divided into three parts : Network Control, Transport Services and Access Services. Only Network Control function and specifically the included Congestion Control are addressed by this invention and shall be described herein.

Congestion Control addresses the making and enforcing bandwidth reservation agreements with provision for burstiness of user's traffic, as well as estimating actual bandwidth and adjusting reservations as necessary.

The congestion control mechanism is a key to understanding Network capabilities. The basic mechanism for network congestion control is a so-called "leaky bucket" mechanism.

One can envision bursty user traffic being dumped into buckets at the edges of a network and being allowed to enter the network through faucets or leaky buckets that enforce an agreed-to flow (i. e. reservation level) into the network. The user's reservation level is a fundamental parameter for enabling network traffic optimization.

Use of the leaky bucket mechanism will guarantee users that their reserved level of traffic will cross the network with bounded delay and with an extremely small probability of packet loss due to congestion in intermediate nodes (on the order of 10⁻⁶). The simplest way to provide for low/no packet loss would be to reserve the entire bandwidth of the user connection to any Network port. For bursty user traffic, however this approach can waste a significant amount of bandwidth across the network. Thus, the new approach is to reserve a bandwidth amount equal to the "equivalent capacity" needed by the user.

Most connections will result in a reserved path across the network. The path will be selected to guarantee a quality of service that includes the bandwidth reservation guarantee.

The new network should provide a quality of service guaranteed and, when required, a bandwidth guaranteed to every transport connection established across the network. When a transport connection with specified bandwidth is setup, an interaction between the network and the connection initiator results in either a guaranteed bandwidth being reserved for this connection or the connection being blocked due to lack of network resources. Once the setup is complete and the transmission starts, the congestion control mechanism ensures that the traffic going into the network stays within the allocated bandwidth by ensuring some long term average rate for the pipe and controlling its burstiness.

The basic preventive congestion control strategy consists of the leaky bucket operating at the source of each origin-destination pair of a pipe, with the following objectives :
- Be transparent to the user, as much as possible, as long as the user traffic parameters are within the negotiated values.
- Limit the user traffic entering the network to the negotiated bandwidth.

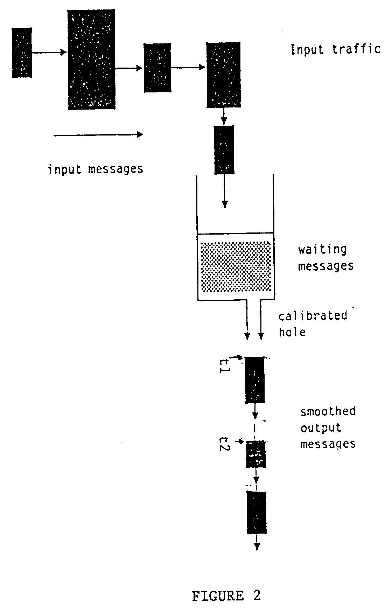

A leaky bucket simplified operation is represented in figure 2. Each message received on the line is filled in the bucket. There is one bucket for each user (virtual connection). The messages received as bucket input are of different sizes and randomly fed as schematically represented by blocks of data of differents sizes and randomly distributed in time. The bucket output is, however, smoothed to take into consideration the level of traffic bandwidth reserved (i. e. paid for) by the considered user, thereby keeping the overall network traffic under control and avoiding any traffic congestion that may otherwise occur in a given part of the network. In other words, the bucket is a buffer which is used to smooth peaks of traffic while keeping the output rate at a predefined value. The output blocks of data are distributed in both sizes and timings made to ascertain the smoothed distribution made in accordance with the user assigned bandwidth.

Several situations may occur. The bucket may be empty in which case the incoming message would be transmitted at the predefined rate, assuming the user has got the required credit (in terms of tokens fed into its assigned count). The bucket may be, on the contrary, full, in which case the current message would be discarded. Finally, the bucket may be neither empty, nor full, and in this case the current message would not only be transmitted after all messages already in the bucket are transmitted, but also, at a predefined moment matching with the user's assigned bandwidth as indicated by the user's current credit.

To that end, for each user, several parameters are kept in memory, including :
- Reserved bandwidth in bytes per second.
- Time of last message received.
- Credit after last message has been sent.
- Time when the user's bucket would be empty.

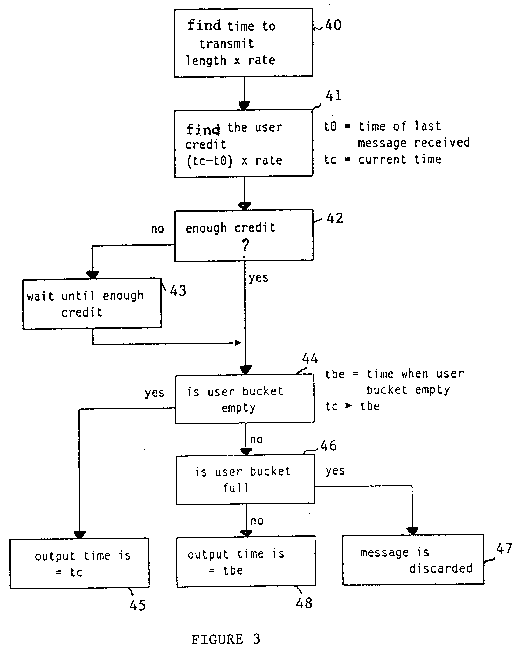

Represented in figure 3 is a simplified flow chart of the leaky bucket operation. Once a user's message is received, the system starts with determining how long it would take to transmit this message by considering the message length and the user's assigned rate (step 40). Then the system computes the current user credit from considering the time of last message received (t0), the current time (tc) and the user assigned rate. A test on user's credit is then performed (step 42). If the user credit is greater than time to transmit the current message, the message processing goes on, otherwise the system waits until enough credit is got by the considered user (step 43). A test is then performed to detect whether the user bucket is empty (step 44). Should this be the case, the current message would be allowed to exit (step 45). Otherwise, a test is performed to detect whether the bucket is full (step 46). In case of positive answer, the message is discarded (step 47) ; otherwise, the time when user bucket would be empty (tbe) is computed and the considered message is time stamped for output at time tbe (step 48).

As one may notice from the above, the process involves manipulating relative timer values. These manipulations may be very expensive in terms of picocode instructions (machine cycles).

A general problem occurs when "dates" of events are program controlled (i. e. compared to each other) if those events are not timestamped with a unique universal dating method (such as "year, month, day, hour, minute, second, millisecond, etc..."), but are simply marked with the current value of a free-ruming timer. In effect, an easy way of marking events (e. g. messages timings) consists in using a free running counter or timer, i. e. a clock-driven free running binary counter the period of which is large as compared to the difference of the dates to be compared.

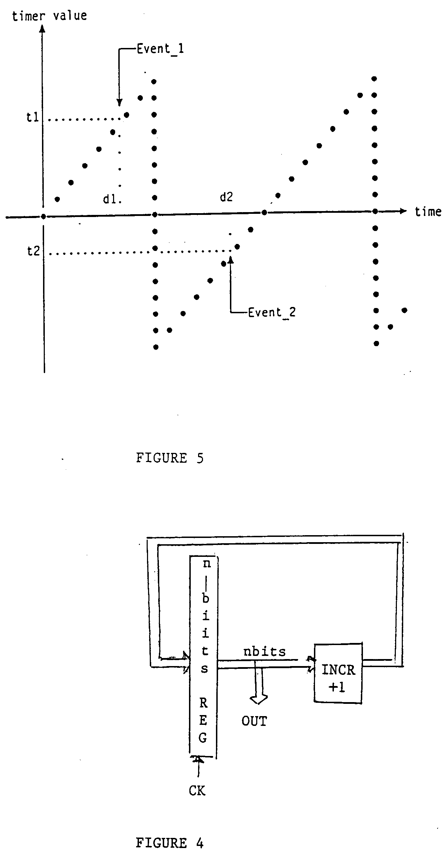

Represented in figure 4 is a block diagram of such a counter as used in the preferred embodiment of the invention. It includes a clocked n-bits long register with a feedback loop including a +1 incrementer. The output is a binary number varying in a sawtooth-like manner. In the preferred embodiment of this invention, n=32 and the counter shall provide binary numbers in 2's- complement form varying as represented in figure 5.

The fact that this timer wraps-around, as its capacity is not infinite, creates a non-linear relationship between two timer values (t1 and t2) and the corresponding dates (d1 and d2). As a consequence, the determination of the oldest of the two considered dates, although still possible by conventional programming means, would take a lot of instructions. This is true with any conventional binary counter. But, in the preferred embodiment of this invention, as shown in figure 5, the timer wraps around from its most positive to its most negative value, with its output being expressed in 2's-complement form.

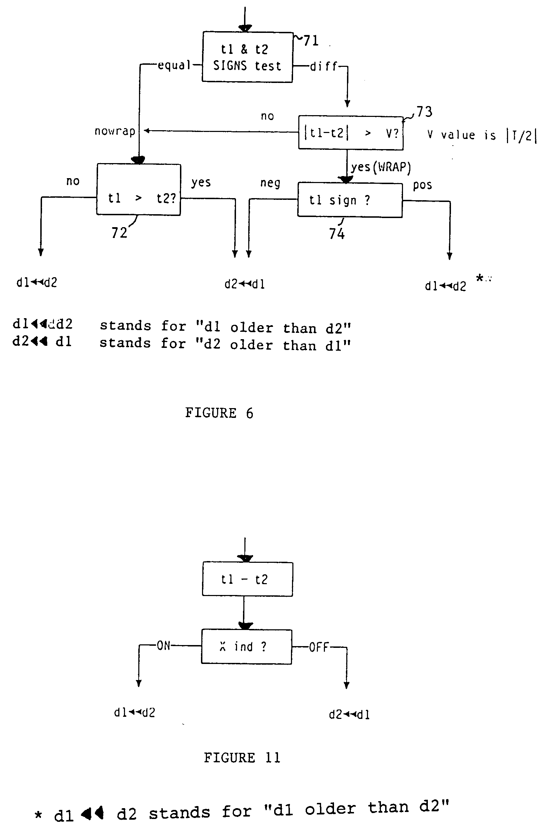

Assume t1 and t2 are close to each other as compared to the timer maximum value (i. e. timer cycle). A flowchart for comparing d1 and d2 may be made according to figure 6. First t1 and t2 signs are compared (step 71). Should both signs be the same, then t1 and t2 magnitudes are compared (step 72). If t1>t2, then d2 is older than d1 ; otherwise d1 is older than d2. If t1 and t2 signs are different, the magnitude |t1-t2| is compared to the magnitude V of T/2 (T being the timer period) (step 73). If |t1-t2| <V then the process goes to step 72 and proceeds as mentioned above. Otherwise the sign of t1 is tested (step 74). If this sign is negative, d2 is older than d1. If the sign is positive, d1 is older than d2.

The above described flowchart may be implemented by the following program:

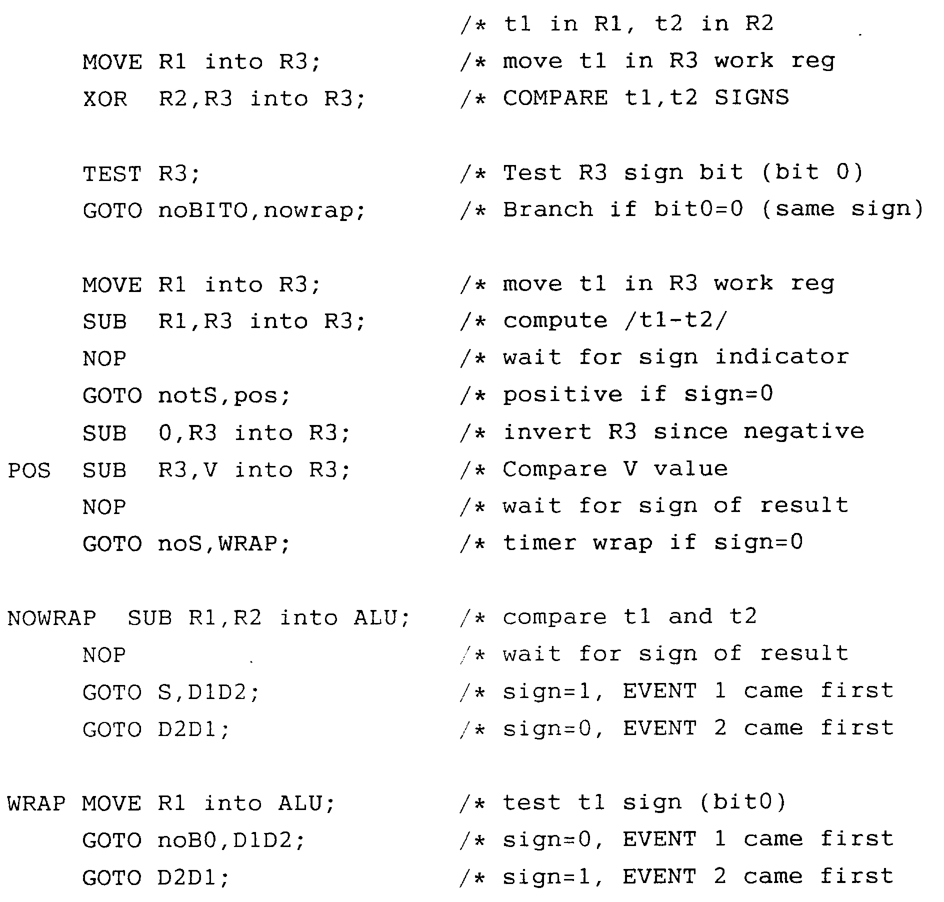

Accordingly, the performance of applications handling many date comparisons, as this is the case with the leaky bucket operation within the high-speed data transmission network, may, therefore, be severely degraded by the timer wrap-around effects, and a more efficient method for discrimating between two dates is needed.

The method proposed in this invention, consists in first executing an operation which has the particularity of setting an indicator herein designated as "X indicator", and then, performing a simple test on said indicator. It is however again to be noted that, in the domain of this application, one is interested essentially in comparing two dates close to each other as compared to the maximum timer value (i. e. timer cycle). The test result for two dates which would be far from each other needs not be accurate.

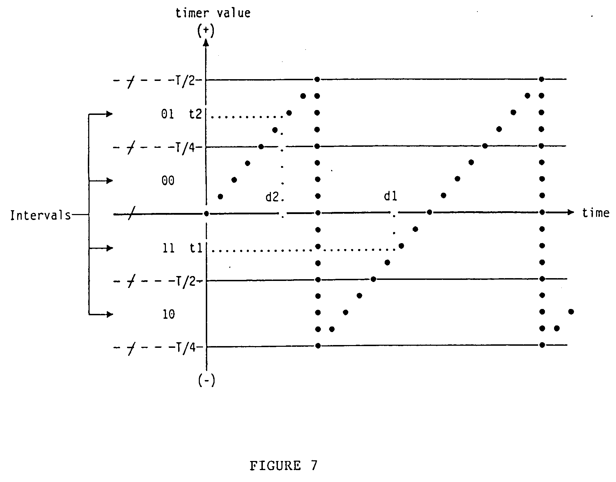

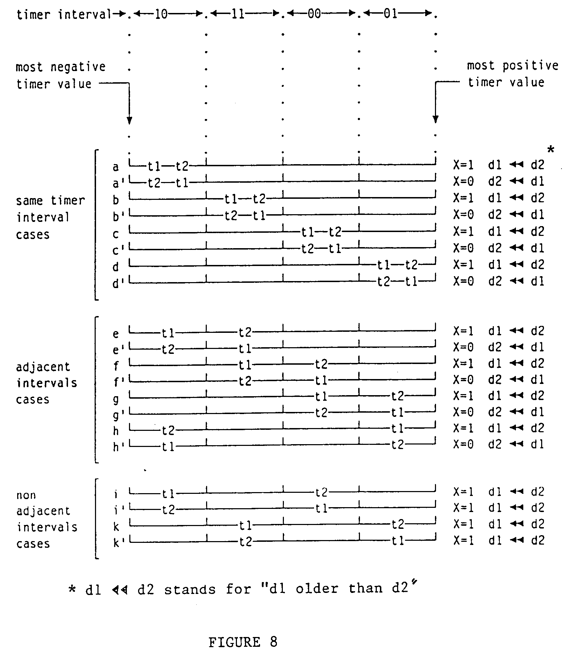

A practical way to implement the invention as proposed herein consists in considering four timer intervals for the whole timer excursion (i.e. swing), as shown in Figure 7. These 4 intervals are defined by the two most significant bits of the timer value. For timer values assumed to be represented by signed binary numbers such as, for instance, signed 2's-complement binary numbers as this is the case for the preferred embodiment of this invention :
interval 10 corresponds to the most negative value range
interval 11 corresponds to the next negative interval
interval 00 corresponds to the first positive interval
interval 01 corresponds to the most positive interval
The following pairs of intervals are considered as adjacent intervals for this invention :
10 and 11
11 and 00
00 and 01
01 and 10
If we assume a substract operation SUB(R1,R2) with a first register R1 containing the timer value t1 expressed as a binary number A in a 2's-complement form and a second register R2 containing the timer value t2 expressed as a binary number B in a 2's-complement form, the special X indicator associated with the subtract operation is generated as shown in the truth table of figure 8.

To that end, one shall distinguish between three cases, i.e. events occuring within the same timer interval, events occuring within adjacent timer intervals, and events occuring within non-adjacent timer intervals. Then, for each case, one shall consider the various timer intervals for both alternatives t1>t2 and t2<t1. Accordingly :
- in case a, t1 and t2 belong to the same timer interval 10 and t1<t2. The value to be generated for X is 1, which means that the dates d1,d2 associated to t1,t2 meet d1 older than d2.
- in case a', t1 and t2 belong to the same timer interval 10 and t1>t2. The value to be generated, for X is 0, which means that the dates d1,d2 associated to t1,t2 meet d2 older than d1.
- in case b, t1 and t2 belong to the same timer interval 11 and t1<t2. The value to be generated for X is 1, which means that the dates d1,d2 associated to t1,t2 meet d1 older than d2.
- in case b', t1 and t2 belong to the same timer interval 11 and t1>t2. The value to be generated, for X is 0, which means that the dates d1,d2 associated to t1,t2 meet d2 older than d1.
- in case c, t1 and t2 belong to the same timer interval 00 and t1<t2. The value to be generated for X is 1, which means that the dates d1,d2 associated to t1,t2 meet d1 older than d2.
- in case c', t1 and t2 belong to the same timer interval 00 and t1>t2. The value to be generated, for X is 0, which means that the dates d1,d2 associated to t1,t2 meet d2 older than d1.
- in case d, t1 and t2 belong to the same timer interval 01 and t1<t2. The value to be generated for X is 1, which means that the dates d1,d2 associated to t1,t2 meet d1 older than d2.
- in case d', t1 and t2 belong to the same timer interval 01 and t1>t2. The value to be generated, for X is 0, which means that the dates d1,d2 associated to t1,t2 meet d2 older than d1.
- In cases e, e', f, f', g and g', the two timer values belong to two adjacent intervals with no timer wrap between them.
   The law to compute X is the same as above. In other words, whenever t1<t2, then the value to be generated for X is 1 meaning that d1 is older than d2; otherwise, if t1>t2, then X=0 and d2 is therefore older than d1.
- in case h, the two timer values belong to two adjacernt values with a timer wrap between them.
   The law to compute X is : t1>t2 => d1 older than d2, hence X=1.
- in case h', the two timer values belong to two adjacent values with a timer wrap between them.
   The law to compute X is : t2>t1 => d2 older than d1, hence X=0.
- in the remaining cases i, i', k and k', the two timer values belong to non adjacent time intervals and the result is arbitrarily set to X = 1 (d1 older than d2).

As one may notice from the above, for cases a through d', one considers events occuring in the same timer interval. For cases e through h', one considers events occuring in adjacent timer intervals. In both instances, the law govering the X indicator value is quite clear. On the contrary, for events occuring within non adjacent timer intervals, the situation is quite different in that X is arbitrarily set. In practice such setting shall be selected by the user in accordance with the network operation. In the preferred embodiment of this invention, X is made to be then set to one.

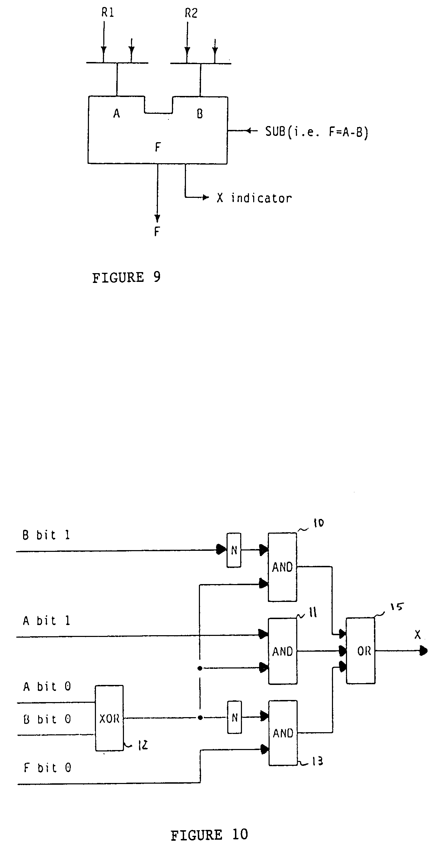

In the preferred embodiment, the generation of the X indicator is done while performing Arithmetic and Logic Unit (ALU) operation SUB(R1,R2). It is assumed that a conventional ALU is used, which is able to perform a subtract operation on two operands, i.e. the two 2's-complement expressed binary numbers A and B representing t1 and t2 respectively. The R1 and R2 ALU input registers respectively contain the A and B values. The R1 and R2 contents are gated to the ALU inputs and the ALU yields result $\text{F = A-B}$. (See figure 9), as well as providing the X indicator value as indicated hereunder.

The generation of the X indicator is detailed hereafter, with reference to cases a, a', ..., h, h' of the truth table of figure 8.

If the ALU operands have the same signs i.e. A_{bit0} and B_{bit0} are both equal to zero or both equal to one (cases a, a ; b, b'; c, c'; d, d'; e, e'and g, g'), then X = 1 if the ALU result is negative (i. e. F_{bit0} = 1).

If the ALU operands have opposite signs, i.e. A_{bit0} and B_{bit0} are different, to determine if X = 1, their second most significant bits are considered (i.e. A_{bit1} and B_{bit1}) according to the following conditions :
- t1 belongs to interval 11 while t2 belongs to interval 00 (cases f, f') or t1 belongs to interval 01 and t2 to interval 10 (cases h, h').
   In those two cases bit 1 of first operand (A_{bit1}) is 1 and bit 1 of second operand (B_{bit1}) is 0.
- t1 belongs to interval 10 and t2 to interval 00 (case i) or the opposite (case i').
   In those two cases, A_{bit1} is 0 and B_{bit1} is 0.
- t1 belongs to interval 11 and t2 to interval 01 (case k) or the opposite (case k').
   In those two cases, A_{bit1} is 1 and B_{bit1} is 1.

In all those cases A and B operands have unequal signs, and X = 1 if A_{bit1} equals 1 or B_{bit1} equals 0 ; otherwise X = 0.

The generation of the X indicator is summarized in the logic block diagram of figure 10. It is to be noted that the logic needed for this function is quite simple (a few logic gates). To that end B bit 1 (i. e. B_{bit1} in the logic expression) is fed into a first AND gate (10) through an inverter circuit N, while A bit 1 (expressed as A_{bit1} in the logic expression) is fed into a second AND gate (11) directly. A bit zero and B bit zero (respectively referenced A_{bit0} and B_{bit0} in the logic expressions) are XORed into a XOR circuit (12), the output of which is fed into a third AND gate (13) through another inverter N, as well as directly fed into the second input of AND gates 10 and 11. The second imput to AND gate (13) is provided by F bit zero (i. e. : Fbit0). Finally, the outputs of AND gates (10, 11 and 13) are ORed (15) to provide the X bit indicator looked for.

Accordingly, the logical operation leading to the X indicator generation may be summarized as follows:${\text{X = F}}_{\text{bit0}} \text{. (} \overline{{\text{B}}_{\text{bit0}} {\text{⊕ A}}_{\text{bit0}}} {\text{) + (B}}_{\text{bit0}} {\text{⊕ A}}_{\text{bit0}} {\text{) . (A}}_{\text{bit1}} \text{+} \overline{{\text{B}}_{\text{bit1}}} \text{)}$ wherein the symbol "." stands for a logical AND operation; "⊕" means a logical XOR operation; "+" means an OR gating logical operation; and "⁻" designate a logical invert operation.

Finally, the events relative occurrences shall be defined very simply by using the algorithm of figure 11 implemented by the very short following programm : 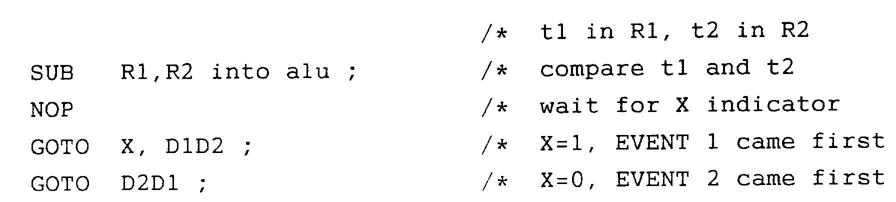
Once the X indicator value is defined, a simple test operates the discrimation between d1 and d2.

Accordingly, the required events, considerations, i. e. determination of the oldest of two dates d1 and d2 are made quite simple and straightforward. To that end, the corresponding time stamps t1 and t2 as provided by the wraparound timer, are submitted to a subtract operation (t1-t2) which has the particularity of providing an F value whose sign shall be considered. Then using said F sign indication as well as bits of position zero (sign bit) and position one of both t1 and t2 values, a very simple logic shall provide the so-called "X indicator". Then X = 1 would mean that dl is older than d2 ; while X = 0 would mean that d2 is older than d1. Accordingly, the required test is made particularly simple and convenient.

## Claims

1. A method for implementing relative time discrimination to detect the oldest between dates of events (d1 and d2) said events being respectively defined by individual times (t1 and t2) expressed by n-bits binary numbers provided by a free running wraparound counter acting as a timer, said events being relatively close to each other as compared to the timer period, said method comprising :
- splitting the timer period into at least four consecutive adjacent intervals , said intervals being defined by at least the two most significant bits of the timer value;
- setting a one bit valued "X indicator" based on t1-t2 sign and on the timer interval location of the respective events as expressed by at least the two most significant bits of the binary numbers A and B expressing t1 and t2 values respectively;
- testing said X indicator bit value and defining the oldest between d1 and d2 dates based on said X bit value test.

2. A method according to claim 1 wherein said intervals are defined by the two most significant bits of the timer value being 10, 11, 00 and 01, respectively.

3. A method according to claim 2 wherein said timer is made to provide numbers expressed in 2's-complement form, whereby said consecutive adjacent intervals include the most negative value range of the timer interval, the next most negative interval, the first positive interval and the most positive interval, said intervals being defined by the two most significant,bits of the timer value 01, 11, 00 and 01 respectively .

4. A method for implementing time discrimination as claimed in claim 2 wherein said splitting the timer period and setting the one bit valued X indicator includes:
- performing the subtract operation $\text{F=A-B}$ ;
- testing A and B's signs and should these signs be identical, setting X=1 if F is negative; otherwise, should said A and B's signs be different, then testing the second most significant bits of A and B, and, should A's second most significant bit be equal to one or B's most significant bit be equal to zero, then setting X=1;
- otherwise, setting X=0.

5. A method according to claim 3 or 4 wherein said X indicator testing simply defines d1 older than d2 if X=1, and d2 older than d1 if X=0.

6. A method for implementing relative discrimination between dates of events according to any one of claims 2 through 5, said date discrimination being used to enable traffic congestion control in a high-speed data transmission network wherein user's traffics are smoothed based on agreed-to individual bandwidths allocations.

7. In a high speed data transmission network wherein identified users are assigned traffic bandwidth on agreed-to bandwidth reservation conditions, whereby the respective traffics are to be individually smoothed accordingly, a congestion control system including means for discriminating between dates of events d1 and d2 said events occurrences being respectively defined by individual times t1 and t2 provided as numbers A and B, respectively, said A and B numbers being expressed in a 2's-complement binary coded form as provided by a free-running wraparound counter acting as a timer , said means for discriminating between d1 and d2 including :
- means for generating a one bit long so-called X indicator, said X indicator deriving from the logical operation:${\text{X = F}}_{\text{bit0}} \text{. (} \overline{{\text{B}}_{\text{bit0}} {\text{⊕ A}}_{\text{bit0}}} {\text{) + (B}}_{\text{bit0}} {\text{⊕ A}}_{\text{bit0}} {\text{) . (A}}_{\text{bit1}} \text{+} \overline{{\text{B}}_{\text{bit1}}} \text{)}$ wherein:
- $\text{F=A-B}$
- bit0 and bit1 are the two highest significant bits, with bit0 being also the sign bit of the 2's-complement expressed numbers A or B
- the symbols "⊕", "." and "+" stand for the logical operations Exclusive-OR, AND and OR respectively
- the symbol "⁻⁻" represents a logical invert operation.
- means for testing X bit and for indicating d1 older than d2 if X=1, otherwise indicating d2 older than d1.
